Europäisches Patentamt

European Patent Office

Office européen des brevets

(19)

(11) Veröffentlichungsnummer : **0 058 856 B2**

(12) # NEUE EUROPÄISCHE PATENTSCHRIFT

(45) Veröffentlichungstag der neuen Patentschrift :
**19.06.91 Patentblatt 91/25**

(51) Int. Cl.⁵ : **A23L 1/23, A23L 1/31,
A23C 19/06, // C12N9/00**

(21) Anmeldenummer : **82100867.9**

(22) Anmeldetag : **06.02.82**

(54) **Verfahren zur Herstellung von aromahaltigen Lebensmittelprodukten und deren Verwendung.**

(30) Priorität : **20.02.81 DE 3106250**

(43) Veröffentlichungstag der Anmeldung :
**01.09.82 Patentblatt 82/35**

(45) Bekanntmachung des Hinweises auf die
Patenterteilung :
**03.04.85 Patentblatt 85/14**

(45) Bekanntmachung des Hinweises auf die
Entscheidung über den Einspruch :
**19.06.91 Patentblatt 91/25**

(84) Benannte Vertragsstaaten :
**AT BE CH FR GB IT LI LU NL SE**

(56) Entgegenhaltungen :
**EP-A- 0 006 380
DE-A- 2 850 635
FR-A- 1 566 509
FR-A- 2 266 464**

(56) Entgegenhaltungen :
**GB-A- 1 075 149
US-A- 4 158 607
JP A 7038501 (Derwent Abstr. D 13-(D16)17-
foods Band 75(1971), unter Nr. 873293j)
Journal of Dairy Science 62 (1979), S.
1713-1718
The Australian Journal of Dairy Technology
(1975), Seite 138 (-142)
Neth. Milk Dairy (1976), 30, Seiten 103 (-105)**

(73) Patentinhaber : **Dr. Otto Suwelack Nachf.
GmbH & Co.
Industriegebiet Hamern Post Box 280
W-4425 Billerbeck/Westf. (DE)**

(72) Erfinder : **Reimerdes, Ernst Hartmut, Dr.
Franckestrasse 16
W-2300 Kiel (DE)**

(74) Vertreter : **UEXKÜLL & STOLBERG
Patentanwälte
Beselerstrasse 4
W-2000 Hamburg 52 (DE)**

EP 0 058 856 B2

**Beschreibung**

Vorliegende Erfindung betrifft ein Verfahren zur Herstellung von aromahaltigen Lebensmittelprodukten, bei dem die Aromabildung ohne die übliche lange Lagerungs- und Reifungszeit ermöglicht wird, sowie die Verwendung dieser Produkte.

Bei der konventionellen Herstellung von aromahaltigen Lebensmitteln, z.B. von Käse, bei der die jeweiligen spezifischen Geruchs- und Geschmacksstoffe durch Einwirkung bestimmter Mikroorganismen auf die Lebensmittelgrundmasse, z.B. Quark- oder Käsebruch, in einem Fermentierungsprozeß gebildet werden, erfolgt die Erzeugung der Geruchs- und Geschmacksstoffe unter Einhaltung bestimmter klimatischer Bedingungen, wie Temperatur und relativer Luftfeuchtigkeit, während einer vom gewünschten Endprodukt abhängigen, relativ langen Lagerzeit, die in der Regel 4 bis 6 Wochen oder länger betragen kann. Die konventionelle Herstellung solcher aromahaltiger Lebensmittelprodukte erfordert daher einen erheblichen Aufwand an Zeit und Lagerraum sowie eine ständige Überwachung der Lagerbedingungen, wodurch sie zeitraubend und kostspielig ist.

Es hat nicht an Versuchen gefehlt, diese konventionnellen Herstellungsmethoden zu verbessern und insbesondere die langen Reifungszeiten zu verkürzen, ohne wesentliche Einbußen an die Qualität des Endproduktes in Kauf nehmen zu müssen. Hierbei hat sich jedoch gezeigt, daß eine schnellere Reifung, beispielsweise durch Zusetzen einer größeren Menge an Kultursubstraten, nur durch eine deutlich herabgesetzte Haltbarkeit der Endprodukte erkauft werden kann.

Es wurden zur Abkürzung der Reifungszeit auch schon verschiedene Verfahren vorgeschlagen, die sich im wesentlichen auf die Herstellung von aromahaltigen Milchprodukten beschränken. So ist beispielsweise aus DE-OS 26 52 558 ein Verfahren zur Herstellung von aromatischer gesäuerter Butter bekannt, bei dem durch Verbuttern eines ungesäuerten Rahms Butterkorn erzeugt wird, in das mindestens ein aromatischer Starter, der durch Einwirkung entsprechender Mikroorganismen auf ein fettarmes Milchprodukt erhalten wurde, und ein gesondert davon ebenfalls durch mikrobielle Umwandlung eines fettarmen Milchproduktes erhaltenes nicht aromatisches Säurekonzentrat eingeknetet werden. Neben dem eigentlichen Butterungsvorgang sind hier zwei nebeneinander und unabhängig voneinander verlaufende mikrobielle Umsetzungen für die Erzeugung von Aromastoffen einerseits und des nicht aromatischen Säurekonzentrats andererseits durchzuführen. Das Verfahren erfordert daher einen relativ großen Aufwand an Zeit, Vorrichtungen und Personal.

Ein Verfahren zur Herstellung von Geschmacks- und Aromazusätzen für Milchprodukte wird in US-PS 3 048 490 beschrieben, bei dem eine sterile, zitratangereicherte Käsemolke, vorzugsweise aus Cottage Cheese, bei einem pH von 5 bis 7 mit einem zitratfermentierenden Mikrobenstamm (Streptococcus diacetilactis) inokuliert und anschließend gereift wird. Das erhaltene Produkt wird in kleiner Menge konventionell hergestelltem Cottage Cheese zugesetzt und erzeugt in ihm bei der normalen dreitägigen Lagerung bis zum Verkauf ein intensiveres Geschmacks- und Geruchsaroma. Mit diesem Verfahren ist demnach lediglich möglich, in einem speziellen Fall der Käseherstellung die Geruchs- und Aromabildung zu intensivieren, ohne daß dabei eine ins Gewicht fallende Verkürzung der Lager- und Reifungszeit erreicht wird.

Weitere bekannte Verfahren betreffen ebenfalls die Intensivierung von Käsearomen, insbesondere von Cheddarkäse-Aroma, z.B. ein in DE-PS 1 913 853 beschriebenes Verfahren, bei dem ein aus der Milchsäuerung erhaltener Labbruch aufgeschlämmt und die Aufschlämmung mit nichttoxischen Mikrokokken versetzt und bis zur Erzielung eines Cheddar-Aromas von einer Intensität, die dem 100 fachen der Intensität eines 1 Jahr alten natürlichen Cheddarkäses entspricht, reifen gelassen wird. Die Reifungszeit beträgt 5 bis 7 Tage, so daß auch hier zwar eine Intensivierung des Aromas, nicht jedoch eine wesentliche Verkürzung der Lager- und Reigungszeit erreicht wird.

Bei einem weiteren, in DE-OS 28 50 635 beschriebenen Verfahren zur Herstellung von Käse und käseähnlichen Produkten geht man von einem Substrat aus, das aus einer genießbaren, flüssigen Protein-Fett-Salze-Zusammensetzung besteht, die im wesentlichen von Lactose frei ist, z.B. Milch oder Milchprodukte, aus denen die Lactose entfernt wurde. Gemäß dem Fließschema Figur 1 dieser Offenlegungsschrift ist das Substrat eine Gesamtmilch, die in Magermilch und Rahm aufgetrennt wird. Einen Teil des Milchproteins hydrolysiert man mit einer Protease, wobei sich die Käsegeschmacks- bzw. Aromakomponenten und ihre Vorstufen bilden. Das hydrolysierte Proteinprodukt wird mit der im wesentlichen nicht hydrolysierten Protein-Fett-Salze-Zusammensetzung vermischt. Parallel hierzu wird ein Teil des Rahms bzw. des im Rahm enthaltenen Butterfetts durch Lipase hydrolysiert, wobei ebenfalls Komponenten des Käsegeschmacks bzw. -aromas gebildet werden. Das fermentierte Rahmprodukt wird anschließend mit dem im wesentlichen nicht hydrolysierten Rahm vereinigt. Danach wird das Rahmprodukt wieder mit dem Magermilchprodukt zusammengeführt und das Gemisch dann in bekannter Weise zu Käse verarbeitet. Im Unterschied zur konventionellen Käseherstellung werden nach diesem bekannten Verfahren nur Teile des gesamten Proteins und des Milchfetts hydrolysiert, um schnell Käsegeschmack bzw. -aroma und die Vorstufen hierfür zu erzeugen. Die Fermentation des Proteins wird bevorzugt mit bekannten Käseerzeugungsorganismen durchgeführt. Mindestens ein Teil des Milchfetts im Rahm wird mit Lipasen behandelt, wie sie normalerweise bei der Käseerzeugung verwendet werden.

Bei dem vorstehend beschriebenen bekannten Verfahren erfolgt demnach die Geschmacks- und Aromabildung zu einem Teil in der Milch vor der Käsebruchbildung, wobei jedoch auf das nachfolgende konventionelle Käseherstellungsverfahren nicht verzichtet werden kann. Auch dieses Verfahren dient daher lediglich zur Unterstützung der Aromabildung beim konventionellen Käseherstellungsverfahren, wobei durch die getrennte Vorbehandlung von Rahm und Magermilch und die anschließende Vereinigung beider Substrate ein erheblicher zusätzlicher Aufwand erforderlich ist.

Aus FR-PS 1 566 509 ist ein Verfahren zur Verbesserung des Geschmacks von Milchprodukten, z.B. von Käse, Milchgetränken, Sahne usw., bekannt, bei dem das zu aromatisierende Produkt mit einem aus Basidiomyceten-Kulturen stammenden Enzym behandelt wird, bis sich ein zufriedenstellender Geschmack entwickelt hat. Die das Enzym liefernden Basodiomyceten sind jedoch keine an der Bildung von für Milchprodukte oder Fleisch- und Wurstwaren charakteristischen, « produktspezifischen » Aromastoffen beteiligten Mikroorganismen. Infolgedessen erhält man nach diesen bekannten Verfahren Produkte mit andersartigen, d.h. nicht produktspezifischen Geruchs- und Geschmacksstoffen, d.h. die eingesetzten Enzyme bilden weder für die Käsearomaerzeugung noch für die Fleisch- und Wurstaromaerzeugung produktspezifische Geruchs- und Geschmacksstoffe.

Schließlich ist aus EU-A 79 400 371.5 ein Verfahren bekannt, bei dem zunächst Proteinkonzentrate durch Ultrafiltration, Dialyse oder präparative Chromatographie hergestellt, auf einen bestimmten Trockengehalt gebracht und mit Fett zu einem standardisierten Gemisch aufbereitet werden, das unter Druck homogenisiert und sterilisiert wird. Das so behandelte Proteinkonzentrat wird einer Gärung vom Typ der Milchsäuregärung, der Propionsäuregärung usw. unterworfen, wobei sich ein Aroma entwickelt, das dem des gewünschten Käses zwar nahe kommt; zur Entwicklung eines typischen Käsearomas bedarf es jedoch einer weiteren, herkömmlichen behandlung mit entsprechenden Kulturen von Mikroorganismen. Auch dieses bekannte Verfahren benötigt daher noch die Reifung mit entsprechenden Bakterienkulturen zur Erzeugung charakteristischer Käsearomen.

Aufgabe der vorliegenden Erfindung ist es, ein Verfahren zur Herstellung von aromahaltigen Lebensmittelprodukten bereitzustellen, mit dem die Reifungszeit erheblich verkürzt und dennoch eine volle Aromaentwicklung im Lebensmittelsprodukt erreicht werden kann, wobei die oben dargestellten Nachteile der bekannten Verfahren, insbesondere die stark herabgesetzte Haltbarkeit der Endprodukte, ganz oder weitgehend vermieden werden sollen.

Gegenstand der Erfindung ist daher das in den vorstehenden Ansprüchen 1 bis 5 aufgezeigte Verfahren zur Herstellung von aromahaltigen Lebensmittelprodukten und die im vorstehenden Anspruch 6 aufgezeigte Verwendung dieser Produkte.

Dem erfindungsgemäßen Verfahren liegt demnach die Idee zugrunde, den geschwindigkeitsbestimmenden Schritt der Erzeugung von spezifischen Geruchs- und Geschmacksstoffen durch mikrobielle Fermentation isoliert vom weiteren Verfahren zur Herstellung aromahaltiger Lebensmittelprodukte unter solchen Bedingungen durchzuführen, die eine erheblich schnellere Entwicklung der gewünschten Geruchs- und Geschmacksstoffe in einer erheblich höheren Konzentration gestatten, als dies bei den konventionellen Verfahren, bei denen die entsprechenden Fermentationsvorgänge im Lebensmittelprodukt selbst stattfinden, auch bei vielfach längeren Reifungs- und Lagerzeiten möglich ist.

Frühere Versuche einer Aromatisierung von Lebensmitteln mit isolierten Enzymen wie Lipasen und Proteinasen haben nicht zu den gewünschten Ergebnissen geführt, sondern ergaben Produkte, die hinsichtlich ihres Aromas nicht befriedigten. Offenbar treten bei der einseitigen Aromaentwicklung nur einige wenige Aromakomponenten auf, die jedoch nicht annähernd der mannigfaltigen und charakteristischen Zusammensetzung und Wirkung eines vollen Aromas entsprechen. Demgegenüber ermöglicht vorliegende Erfindung durch Verwendung des gesamten aromaspezifischen Enzymkomplexes eine volle, für das jeweilige Lebensmittelprodukt spezifische Aromaentwicklung.

Um die für ein bestimmtes Lebensmittelprodukt charakteristische Geruchs- und Geschmacksnote möglichst vollständig zu treffen, ist es erforderlich, von Rein- oder Mischkulturen solcher Mikroorganismen auszugehen, von denen bekannt ist, daß sie die Enzyme bzw. Enzymkomplexe erzeugen, unter deren Einwirkung die Fermentierung von Proteinen, Kohlenhydraten und gegebenenfalls Fetten zu den gewünschten charakteristischen Aromastoffen stattfindet. Diese Rein- oder Mischkulturen werden bevorzugt unter den für die jeweiligen Geruchs- und Geschmacksstoffe spezifischen Reifungsbedingungen kultiviert. Dadurch wird sichergestellt, daß die exogen und/oder endogen gebildeten Enzymkomplexe in ihrer Gesamtheit möglichst genau dem Enzymspektrum entsprechen, das für die Entwicklung der charakteristischen Geruchs- und Geschmacksnote in einem in konventioneller Weise gereiften Lebensmittelprodukt verantwortlich ist.

Hinsichtlich der Enzymkomplexe werden beim erfindungsgemäßen Verfahren die Rein- oder Mischkulturen von Mikroorganismen in einem produktspezifischen Nährmedium kultiviert. Da in der Praxis im allgemeinen bereits vor Durchführung des erfindungsgemäßen Verfahrens bekannt ist, welches Lebensmittelprodukt bzw. welche Lebensmittelgrundmasse aromatisiert werden soll, wird die Zusammensetzung der Nährmedien für die Rein- oder Mischkulturen bereits auf die zu aromatisierenden Produkte abgestimmt. Sollen Milchprodukte, z.B. Frischkäse oder eine Käsegrundmasse wie Quark, aromatisiert werden, so wird für die Erzeugung von Geruchs- und Geschmacksstoffen zur Aromatisierung dieser Milchprodukte Molke und/oder Milch bzw. deren Inhaltsstoffe als mindestens ein Teil des Nährmediums eingesetzt.

Das erfindungsgemäße Verfahren zeichnet sich dadurch aus, daß es nicht nur für die Aromatisierung von Milchprodukten, sondern auch für die Aromatisierung von Fleisch- und Wurstwaren eingesetzt werden kann, die bislang ihre produktspezifische Geruchs- und Geschmacksnote durch wochen- oder monatelange Reifung und Lagerung durch Einwirkung spezifischer Mikroorganismen erhielten und nunmehr in erheblich kürzerer Zeit mit einem vollen, produktspezifischen Aroma zugestattet werden können. In diesem Fall findet die Kultivierung entsprechend geeigneter Rein- oder Mischkulturen von Mikroorganismen für die Erzeugung von Geruchs- und Geschmacksstoffen zur Aromatisierung von Fleisch- und Wurstwaren in Nährmedien statt, in denen Fleischsaft und/oder Fleischhomogenisat und/oder Blutserum bzw. Bestandteile daraus als mindestens ein Teil des Nährmediums eingesetzt wird.

Stufe a$_1$) bzw. a$_2$)

Die Auswahl der für die Durchführung des erfindungsgemäßen Verfahrens geeigneten Mikroorganismen-Kulturen hängt naturgemäß von dem jeweiligen Lebensmittelprodukt ab, das aromatisiert werden soll. Am bekanntesten sind die Rein- oder Mischkulturen von Mikroorganismen, die bei der Herstellung von Milchprodukten, insbesondere von Käse, gebräuchlich sind. Dabei sind die eigentlichen Aromabildner von den reinen Milchsäurebildnern zu unterscheiden. Auf letztere kann verzichtet werden, da der pH-Wert statt durch eine beispielsweise 24-stündige Reifung mit Milchsäurebakterien auch durch vorherigen Zusatz einer bestimmten Menge einer Säure, üblicherweise Milchsäure, oder durch Zugabe von z.B. Glucono-δ-lacton (GDL) zur Lebensmittelgrundmasse eingestellt werden kann. Für die Durchführung des erfindungsgemäßen Verfahrens eignen sich insbesondere Aromabildner wie Streptococcus cremoris, Streptococcus lactis und Streptococcus diacetilactis. Weitere geeignete Kulturen können aus Penicillium camemberti, Penicillium glaucum sowie Penicillium roqueforti, sowie aus Bacterium linens (= Brevibacterium linens) bestehen. Gut geeignet sind auch die Milchsäurebildner der Familie der Lactobacillaceae, soweit sie neben der Milchsäuregärung auch noch Aromabildner sind, z.B. Lactobacillus helveticus, Lactobacillus casei, Lactobacillus lactis, Lactobacillus thermophilus. Hierzu gehören alle bekannten Kulturen oder Mischkulturen von Mikroorganismen, die für die Herstellung von Geschmacks- und Geruchsstoffen geeignet sind.

Wenn das zu aromatisierende Lebensmittelprodukt eine Fleisch- oder Wurstware ist, können als Mikroorganismen-Kulturen u.a. Milchsäurebakterien, Mikrokokken, Pediokokken, z.B. Pediococcus cerevisiae, verwendet werden.

Mit den vorstehend aufgezählten Mikroorganismen-Kulturen sind nicht sämtliche geeigneten Kulturen genannt. Vielmehr stehen sie nur als Beispiele für die große Zahl ebenfalls geeigneter Kulturen, und es ist für den Fachmann anhand der Lehre der vorliegenden Erfindung unschwer zu ermitteln, welche Mikroorganismen-Kultur für eine spezifische Aromatisierung eines bestimmten Lebensmittelproduktes infrage kommt.

Zur Durchführung des erfindungsgemäßen Verfahrens ist es erforderlich, daß die für die Erzeugung bestimmter Geruchs- und Geschmacksstoffe verantwortlichen Mikroorganismen je nach den Erfordernissen in Rein- oder Mischkulturen unter Einsatz optimaler Nährmedien gezüchtet werden. Die Mikroorganismen bilden endogen oder exogen die Enzyme bzw. Enzymkomplexe, die isoliert werden müssen. Soweit die Enzyme bereits im Nährmedium vorliegen, können sie durch einfache Filtration bzw. Separierung von den Mikroorganismen getrennt und in an sich bekannter Weise schonend aufbereitet werden. Ein Teil der Enzyme befindet sich jedoch eingeschlossen in den Mikroorganismen und kann aus ihnen nur durch Zerstörung der Mikroorganismen befreit werden, z.B. durch Desintegration der Mikroorganismen mittels Ultraschall oder eines ähnlichen Verfahrens, worauf die Zellbestandteile in an sich bekannter Weise entfernt und die Gesamtenzymkomplexe isoliert werden.

So werden beispielsweise die Enzyme aus dem zellfreien Medium durch Ultrafiltration zu einem Konzentrat angereichert und/oder durch Lyophilisieren getrocknet. Die Enzyme können aber auch durch Eiweißfällung, z.B. durch Aceton- oder Ammoniumsulfat-Fällung, isoliert werden. Je nach der Vorbehandlung, z.B. der Teilinaktivierung durch Erwärmen oder der Isolierungstechnik, werden Enzympräparate mit unterschiedlicher Aromakapazität erhalten.

Soferb das zu aromatisierende Lebensmittelprodukt ein Milchprodukt ist, werden die exogen und endogen gebildeten Enzymkomplexe aus Rein- oder Mischkulturen von vorzugsweise in der Käserei gebräuchlichen Mikroorganismen isoliert. Entsprechend ist es vorteilhaft, wenn das zu aromatisierende Lebensmittelprodukt aus einer Fleisch- oder Wurstware besteht, die exogen und/oder endogen gebildeten Enzymkomplexe aus Rein- oder Mischkulturen von Mikroorganismen zu isolieren, die die für die Erzeugung von Geruchs- und Geschmacksstoffen in Fleisch- und Wurstwaren wesentlichen Enzymkomplexe bilden.

Die vorstehend genannten bevorzugten Ausführungsformen des erfindungsgemäßen Verfahrens, insbesondere auch die Wahl von Molke und/oder Milch als mindestens ein Teil des Nährmediums, wenn die gebildeten Enzyme bzw. Enzymkomplexe für die Erzeugung von Geruchs- und Geschmacksstoffen zur Aromatisierung von Milchprodukten eingesetzt werden sollen, oder von Fleischsaft und/oder Fleischhomogenisat und/oder Blutserum als mindestens ein Teil des Nährmediums, wenn die gebildeten Enzyme zur Aromatisierung von Fleisch- und Wurstwaren eingesetzt werden sollen, dienen dazu, dem Reinheitsgebot entsprechende produktverwandte bzw. produktspezifische Aromastoffe herzustellen. Gleichzeitig wird dem Umstand Rechnung getragen, daß bei der Gewinnung der Enzymkonzentrate Reste des Nährmediums in die Produkte gelangen können und bereits bei der Kultivierung der Mikroorganismen Aromastoffe gebildet werden.

Wenn die Aromatisierung von Milchprodukten beabsichtigt ist, kann wenigstens ein Teil des Nährmediums aus Molkenbestandteilen, Sahne, Vollmilch, Magermilch oder Trockenmilch bestehen. Bei der Aromatisierung von Fleischprodukten empfiehlt es sich, Fleischpasten, Serum-Proteine u.dgl. und-/oder abgebaute Proteine, z.B. Peptone, als Teil des Nährmediums für die Kultivierung der Mikroorganismen zu verwenden. Das optimale Nährmedium kann 5 bis 20 Gew.-% Trockensubstanz enthalten. Vor der Kultivierung wird das Nährmedium vorteilhaft durch Erhitzen sterilisiert, beispielsweise 30 Minuten bei 60 bis 65°C entsprechend der Langzeitpasteurisierung, oder keimfrei filtriert, um Fehlentwicklungen zu vermeiden und Fremdenzyme möglichst weitgehend zu unterdrücken. Wenn für die Kultivierung oder Züchtung der Mikroorganismen eine Proteindenaturierung erforderlich ist, kann auch höher erhitzt werden.

Die Züchtung bzw. Kultivierung der ausgewählten Mikroorganismen erfolgt zweckmäßig unter spezifischen, für die Entwicklung der Mikroorganismen optimalen Bedingungen, die im allgemeinen im Temperaturbereich von 15 bis 37°C liegen und im übrigen vom Hersteller der eingesetzten Mikroorganismenart bzw. aus der einschlägigen Literatur erfahren werden kann. In einer besonders bevorzugten Ausführungsform des erfindungsgemäßen Verfahrens wird die Kultivierung der ausgewählten Rein- oder Mischkulturen der betreffenden Mikroorganismen in der Weise durchgeführt, daß das optimale Nährstoffmedium für die betreffende Kulturenart mit einer möglichst hohen Anfangskeimzahl beimpft wird und die Enzymbildungs- und Wachstumsphase möglichst kurz gehalten wird. Die Verhältnisse bei Mischkulturen ergeben sich aus den jeweiligen Produktgegebenheiten. Im allgemeinen kann davon ausgegangen werden, daß für das erfindungsgemäße Verfahren geeignete Enzympräparate in der Regel nur erhalten werden können, wenn die Kultivierung bzw. Züchtung der Mikroorganismen-Kulturen unter möglichst optimalen Bedingungen erfolgt. Im übrigen hängen die anzuwendenden Bedingungen, wie Temperatur, Luftfeuchtigkeit, pH-Wert im Nährmedium, aerobe oder anaerobe Bedingungen, Nährstoffbedarf sowie die Art der technischen Kultivierungsanlagen, z.B. ob Oberflächenkultur oder Submerskultur u.dgl., von der Art der Mikroorganismen und der gewünschten Enzyme bzw. Enzymkomplexe ab. Für jede Mikroorganismen-Rein- oder -Mischkultur sind die hierfür optimalen Bedingungen im einzelnen vom Fachmann anhand von Vorversuchen unschwer zu ermitteln.

Stufe b)

Die isolierten und gegebenenfalls konzentrierten und standardisierten Enzyme bzw. Enzymkomplexe werden einer wässrigen Substratlösung bzw. -suspension zugefügt, die in ihrer Zusammensetzung der Produktzusammensetzung der ungereiften, zu aromatisierenden Lebensmittelgrundmasse, bezogen auf die Trockenmasse, entspricht. Dadurch erhält man ein sogenanntes Biokonzentrat (Aromakonzentrat), in dem der die Aromakomponente darstellende, charakteristisch zusammengesetzte Gesamtkomplex aus biochemischen Metaboliten und Lebensmittelmatrix enthalten ist. Durch den Zusatz einer vorher festgelegten geeigneten Menge dieses Biokonzentrats zu dem zu aromatisierenden Rohprodukt kann die Reifungszeit des Produktes erheblich verkürzt und die Aromastruktur der Lebensmittelprodukte in der gewünschten Weise spezifisch gesteuert werden. Überraschenderweise erhält man mit dem erfindungsgemäßen Verfahren Lebensmittelprodukte, die ein charakteristisches, voll ausgebildetes Aroma der gewünschten Art besitzen, wie es mit konventionellen Verfahren nur durch Langzeitreifung erzielt werden kann, und trotz einer enorm verkürzten Reifungs- und Lagerzeit eine annehmbare Konsistenz und eine gegenüber vergleichbaren, nach konventionellen Verfahren schnell gereiften Produkten deutlich verbesserte Haltbarkeit aufweisen. Einzelenzyme, z.B. Proteinasen oder Lipasen, führen mit dem erfindungsgemäßen Verfahren nicht zu den gewünschten Ergebnissen, insbesondere nicht hinsichtlich des voll ausgebildeten Aromas.

Stufe c)

Im allgemeinen wird bei der konventionellen Herstellung von aromahaltigen Lebensmitteln, insbesondere von Käseprodukten, zunächst das Produkt in seiner endgültigen Grundstruktur vorgefertigt ; beispielsweise erfolgt bei der konventionellen Käseherstellung nach- der Vorbehandlung, insbesondere Standardisierung und Wärmebehandlung der Käsereimilch, ihre Dicklegung und danach das Ausschöpfen und Ausformen des Käsebruches. Der ausgeformte Käsebruch stellt eine mehr oder weniger feste Masse dar, deren Grundstruktur im wesentlichen fertig vorliegt. Dieses vorgefertigte Produkt wird nach konventioneller Verfahrensweise anschließend einer mehr oder weniger langen Lagerzeit unterworfen, während der das Produkt ausreift und sich das produktspezifische Aroma ausbildet. Bei dieser Reifung spielen sich komplizierte biochemische Prozesse ab, die durch die bereits vorhandenen bzw. nachträglich zugesetzten Mikroorganismen in Gang gesetzt und weitergeführt werden. Diese Vorgänge laufen unter bestimmten Klimabedingungen ab und benötigen relativ viel Zeit.

Im Unterschied dazu wird mit dem erfindungsgemäßen Verfahren ein Weg aufgezeigt, auf dem man den langwierigen Reifungsprozeß erheblich verkürzen kann und dennoch zu Lebensmittelprodukten mit einem vollen produktspezifischen Aroma gelangt. Dieser Vorteil des erfindungsgemäßen Verfahrens gegenüber bekannten Verfahren zur Herstellung von Käse und/oder käseähnlichen Produkten wird ohne einen vergrößerten Aufwand an technischen Anlagen und Personal erreicht, und führt zu einer vergleichbaren Qualität, insbesondere hinsichtlich Aroma und Konsistenz, wie man sie sonst nur bei den nach herkömmlichen Verfahren durch Langzeitreifung hergestellten Produkten findet.

Wie vorstehend bereits gezeigt, ist das erfindungsgemäße Verfahren vielseitig anwendbar. Mit dem erfindungsgemäßen Verfahren können zum Teil im Zeitraffertempo alle Vorgänge simuliert werden, die sich auch bei den konventionellen Verfahren abspielen. Daher sind auch sämtliche bei entsprechenden konventionellen Verfahren verwendeten Mikroorganismen-Kulturen in der Regel für das erfindungsgemäße Verfahren brauchbar, beispielsweise die vorstehend im einzelnen erwähnten Mikroorganismus-Arten. Im konkreten Einzelfall werden aus dem großen Angebot die für den gewünschten Zweck jeweils aromaspezifischen Mikroorganismus-Arten als Rein- oder Mischkulturen ausgewählt und einzeln oder kombiniert mit anderen geeigneten Kulturen angewendet.

Da es sich bei der Erzeugung der Geruchs- und Geschmacksstoffe um außerordentlich kompliziert verlaufende Fermentierungsprozesse handelt, kann ein Nachvollziehen dieser Vorgänge in wesentlich kürzerer Zeit wie beim erfindungsgemäßen Verfahren nur dann zu einem befriedigenden Ergebnis führen, wenn alle erforderlichen Verfahrensschritte sorgfältig durchgeführt und miteinander koordiniert werden. Dabei ist es für den Erfolg des Verfahrens wesentlich, daß die biochemischen Vorgänge in der oben beschriebenen Weise produkt- und aromaspezifisch durchgeführt werden, damit es nicht zur Bildung von unerwünschten Aromen bzw. Off-Flavour kommt. Die nach dem erfindungsgemäßen Verfahren ermöglichte beschleunigte Reifung bedeutet außerdem, daß nicht, wie bei den konventionellen Verfahren, mit Rohstoffen gearbeitet werden kann, die einen reduzierten Wassergehalt aufweisen, sondern daß die Enzymkomplexe nach ihrer Isolierung auf Substratsuspensionen einwirken, die zwar der Zusammensetzung der Lebensmittelgrundmasse entsprechen, aber einen höheren Wassergehalt besitzen.

Stufe d)

Nach erfolgter Aromatisierung der betreffenden Lebensmittelgrundmasse werden zwecks besserer Haltbarkeit der Geruchs- und Geschmacksnote die Enzyme bzw. Enzymkomplexe z.B. durch Erhitzen denaturiert. Dermaßen behandelte Produkte können auch bei Raumtemperatur gelagert werden, während eine Kühllagerung erforderlich ist, wenn die Enzyme im Produkt unverändert erhalten bleiben. Welche von beiden Möglichkeiten gewählt wird, hängt von dem jeweiligen Produkt und von den entsprechenden Lagerungs- und Distributionsmöglichkeiten für diese Produkte ab.

Stufe e)

Die so erhaltenen Fermentatlösungen bzw. -suspensionen, die die gewünschten Geruchs- und Geschamcksstoffe enthalten, werden, gegebenenfalls nach vorheriger schonender Konzentrierung oder Trocknung und/oder Standardisierung, in einer die gewünschte Aromatisierung bewirkenden ausreichenden Menge den zu aromatisierenden Lebensmittelgrundmassen auf der Basis von Milchprodukten bzw. Fleisch- oder Wurstwaren zugesetzt, wobei gegebenenfalls eine weitere Reifung des Endproduktes angeschlossen wird.

Mit Hilfe des erfindungsgemäßen Verfahrens ist es demnach möglich, in einem Schnellverfahren praktisch aromafreie Lebensmittelprodukte durch Einarbeiten entsprechender produktspezifischer Aromakonzentrate in hochwertige aromahaltige Lebensmittelprodukte zu überführen, wobei diese eine Aromastruktur erhalten, die derjenigen eines vergleichbaren, aber nach konventioneller Art gereiften und gelagerten Produktes sehr ähnlich ist. Wenn die aromafreie Lebensmittelgrundmasse ein Milchprodukt, z.B. Käsebruch, ist, kann das daraus erhaltene aromahaltige Lebensmittelprodukt ein Aroma aufweisen, das einem typischen Käsearoma entspricht. In ähnlicher Weise kann durch Anwendung von Enzymkomplexen aus entsprechenden Kulturen von Mikroorganismen ein aromahaltiges Lebensmittelprodukt mit einer Aromastruktur erhalten werden, die derjenigen eines typischen Wurstaromas entspricht.

Die nach dem erfindungsgemäßen Verfahren hergestellten Aromakonzentrate können demnach zur Herstellung hochwertiger Lebensmittel, die den Anforderungen traditioneller Produkte gerecht werden, verwendet werden. Dabei werden Reifungszeit und Lagerhaltung erheblich verringert und damit die Voraussetzungen für ein kostengünstigeres, gegebenenfalls kontinuierliches Verfahren geschaffen. Mit dem erfindungsgemäßen Verfahren können auch Aromen erzeugt werden, die durch Oberflächenreifung, wie z.B. bei Tilsiterkäse, Romadur und Salami, oder durch lokalisierte Fermentation, wie z.B. beim Roquefort-Käse, erhalten werden. Mit dem erfindungsgemäßen Verfahren lassen sich auch technologische Probleme lösen, die im Gefolge der modernen Großproduktion und neuer Verarbeitungsformen, wie Folienreifung, aufgetreten sind, wobei ein Vorteil des erfindungsgemäßen Verfahrens darin besteht, daß die Endprodukte eine Produktqualität aufweisen, die sich auf traditionelle Flavor-Strukturen zurückführen läßt.

Nachfolgend wird das erfindungsgemäße Verfahren im einzelnen weiter erläutert.

Stufe a)

Um mit dem erfindungsgemäßen Verfahren aus einer praktisch aromafreien Lebensmittelgrundmasse ein Lebensmittelprodukt mit einer spezifischen Geschmacks- und Geruchsnote herzustellen, wird zunächst eine für den gewünschten Aromatyp spezifische Mikroorganismen-Rein- oder -Mischkultur ausgewählt und für diese Kultur ein geeignetes Nährmedium angesetzt und auf optimale Kultivierungsbedingungen gebracht. Zweckmäßig wird das Nährmedium der Lebensmittelgrundmasse, die aromatisiert werden soll, hinsichtlich pH-Wert, Salz- und Substratkomponenten (z.B. der Eiweiß- und Kohlehydratkomponenten) angepaßt. Für den Fall, daß die Lebensmittelgrundmasse ein Milchprodukt ist, soll das Nährmedium nach Möglichkeit Caseine, Caseinhydrolysate und andere Milchbestandteile enthalten, da durch solche Zusätze bereits eine produktspezifische Enzymentwicklung gefördert wird.

Das Nährmedium wird in bekannter Weise pasteurisiert, um die Zahl der unerwünschten natürlichen Keime zu reduzieren. Anschließend wird das Nährmedium auf die optimale Bebrütungstemperatur abgekühlt, in einen Fermenter gegeben und entsprechend den günstigsten Wachstums- und Fermentationsbedingungen, die in Vorversuchen ermittelt werden können, die ausgewählten Mikroorganismen gezüchtet. Während der Inkubation werden die für die Bildung der spezifischen Geschmacks- und Geruchsstoffe verantwortlichen Enzyme bzw. Enzymkomplexe exogen und/oder endogen von den Mikroorganismen gebildet. Die Inkubation wird bis zur maximalen Bildung von Biomasse bei optimalen Bedingungen durchgeführt, die der Fachmann in Vorversuchen feststellen kann.

Beispielsweise erfolgt bei einer Kultivierung des Aromabildners Streptococcus cremoris in einem Nährmedium aus pasteurisierter oder ultrahocherhitzter Magermilch mit etwa 10 bis 20 Gew.% Trockenmasse die Beimpfung mit 5 bis 50 g Streptococcus cremoris je 1000 g Magermilch. Die Bebrütung erfolgt zweckmäßig in einem geschlossenen oder offenen Fermenter 6 bis 24 Stunden bei einer Temperatur zwischen 20 und 40°C und bei einem pH-Wert zwischen 4 und 6. Vor und während der Bebrütung kann das beimpfte Nährmedium gerührt und mit Sauerstoff, Luft oder einem anderen geeigneten Gas begast werden, wobei Agitation und Begasung spezifisch gesteuert werden können. Nach diesem Verfahren können Keimzahlen von mehr als $10^{10}$ pro Gramm Nährmedium erreicht werden.

Anschließend erfolgt die Isolierung der Enzyme bzw. Enzymkomplexe, wobei zunächst die Zellen durch Zentrifugieren und zellfreie Filtration entfernt und die im Nährmedium vorhandenen Enzyme in an sich bekannter Weise isoliert und gegebenenfalls durch Vakuum- oder Gefriertrocknung oder eine andere schonende Trocknung konzentriert und standardisiert werden. Die in der Biomasse enthaltenen endogenen Enzyme müssen durch eine Spezialbehandlung aufgeschlossen werden, beispielsweise durch Zerstören der Zellen durch Ultraschall, Hochdruckdesintegration, Autolyse oder entsprechende andere Verfahren, worauf die Zellbestandteile durch Filtration entfernt und gegebenenfalls ausgewaschen und die Enzyme aus dem Filtrat in der oben angegebenen Weise isoliert und weiterverarbeitet werden. Dies kann auch durch Isolierung der Enzyme mit Ionenaustauschern oder anderen chromatographischen Techniken oder durch Fällungsverfahren, z.B. durch Lösungsmittelfällung, und anschließende schonende Trocknung zu hochangereicherten biospezifischen Enzymkonzentraten geschehen. Falls gewünscht, ist auch eine direkte Verwendung der isolierten Enzymkomplexe möglich. Die auf diese Weise erhaltenen Enzyme bzw. Enzymkomplexe, gegebenenfalls in Form von Enzymkonzentraten, haben die für die Bildung von Aromastoffen der gewünschten Geruchs- und Geschmacksrichtung spezifische Zusammensetzung.

Die Enzymzusammensetzung kann, falls gewünscht, in gewissen Grenzen durch ausgewählte Nachbehandlungsmethoden variiert werden, z.B. durch abgestimmte Wärmebehandlung und/oder Lösungsmittel- und/oder Salzbehandlung, durch die jeweils eine graduell abgestufte Teilinaktivierung der Enzyme bzw. Enzymkomplexe erreicht wird.

Stufen b) und c)

Die isolierten und gegebenenfalls konzentrierten Enzymkomplexlösungen werden nun einer wässrigen

Substratlösung oder -suspension zugesetzt, wobei das Substrat in seiner Zusammensetzung der Produktzusammensetzung der Trockenmasse der ungereiften Lebensmittelgrundmasse entspricht, die aromatisiert werden soll. Hierbei ist wesentlich, daß das zu fermentierende Substrat in einer ausreichenden Menge Wasser gelöst und/oder suspendiert ist, da dies eine Grundvoraussetzung für eine gute Durchmischbarkeit der Enzymkomplexe mit den Substratteilchen und damit für eine schnelle Aromaentwicklung ist. Vorzugsweise enthält die Lösung oder Suspension das zu fermentierende Substrat in einer Menge von bis zu 50 Gew.%.

Die Fermentierung wird unter für die Enzymkomplexe und das Substrat optimalen Bedingungen durchgeführt, die erforderlichenfalls vom Fachmann in Vorversuchen unschwer ermittelt werden können. Im allgemeinen werden Substrat und Enzymkomplexe in Wannen oder Behältern, die offen oder geschlossen sein können, der biochemischen Schnellreifung überlassen.

Beispielsweise wird als Substrat eine in üblicher Weise hergestellte Käsegrundmasse im Gewichtsverhältnis 1 : 1 bis 1 : 10 mit Molke, Permeat. Retentat und/oder Wasser vermischt, die Mischung homogenisiert und einer Langzeitpasteurisierung oder Ultrahochtemperaturbehandlung unterworfen. Nach dem Abkühlen auf eine für das anzuwendende Enzympräparat günstige Inkubationstemperatur, die vorzugsweise im Bereich von 20 bis 40°C liegt, erfolgt der Zusatz von etwa 1 bis 20 Teilen des getrockneten bzw. 5 bis 100 Teilen des flüssigen Enzympräparats, bezogen auf die Gesamtmenge der umzusetzenden Suspension (Reifungsansatz), und anschließend die Inkubation 6 bis 48 Stunden lang, bei der Bildung wesentlicher Mengen leichtflüchtiger Aromastoffe zweckmäßig in einem geschlossenen Fermenter. Dabei muß durch Zufuhr von Sauerstoff, Stickstoff oder $CO_2$ für die Bildung der erforderlichen Atmosphäre gesorgt werden, Die Aromabildung wird durch Analyse und Bestimmung der charakteristischen Aroma-Leitsubstanzen wie Milchsäure, Acetoin, Diacetyl oder freie Aminosäuren der bestimmten Amine anhand regelmäßig entnommener Proben verfolgt und kontrolliert.

Die Aromabildung setzt bereits nach kurzer Zeit ein und kann, da man von dem zu erzeugenden, an sich bekannten Aromatyp in der Regel ein oder mehrere für diesen Aromatyp charakteristische Leitsubstanzen kennt, durch regelmäßige Probeentnahmen und Analysen während der Schnellreifung laufend kontrolliert werden. Diese Kontrollmöglichkeit ist relativ einfach und rasch durchzuführen und hat sich zur sicheren Kontrolle dieses Verfahrensschrittes gut bewährt. Die nach dem erfindungsgemäßen Verfahren erfolgende Aromabildung während der biochemischen Schnellreifung wird daher vorzugsweise anhand von für die jeweiligen Geruchs- und Geschmacksstoffe charakteristischen Leitsubstanzen, gegebenenfalls durch Headspace-Analyse, kontrolliert.

Da die Aromabildung ein außerordentlich komplizierter biochemischer Vorgang ist, der sehr empfindlich auf Änderungen in den Verfahrensbedingungen reagiert, ist es zweckmäßig, in Probeläufen zunächst die für das jeweilige Substrat und die Enzymkomplexe optimale Prozeßführung zu ermitteln ; nur so kann sichergestellt werden, daß der Gesamtkomplex an gebildeten Aromasubstanzen im Hauptverfahren nach Beendigung der Schnellreifung den Erwartungen entspricht, d.h. einem in konventioneller Weise durch Langzeitreifung gebildeten « echten » Aroma zumindest sehr nahe kommt.

Stufe d)

Die gewünschte Aromabildung erfolgt innerhalb weniger Stunden, wobei die Einwirkungsdauer von der Art der Enzymkomplexe, der Substratzusammensetzung sowie den vorhandenen Konzentrationen abhängt. Der Zeitpunkt der Beendigung bzw. des Abbruchs der Aromabildung wird durch analytische Methoden, z.B. durch Bestimmung des Gehalts der Lösung an freien Fettsäuren mit Hilfe der oben erwähnten Headspace-Analyse, bestimmt. Die Schnellreifung wird zweckmäßig durch geeignete Denaturierung der Enzyme gestoppt, vorzugsweise durch eine Ultrahocherhitzungsbehandlung, bei der das schnell gereifte Produkt einer kurzzeitigen Erhitzung im Durchflußverfahren auf eine Temperatur oberhalb 80°C, bevorzugt durch Ul-trahocherhitzung oder Kurzzeithocherhitzung auf etwa 120 bis 140°C für etwa 1 bis 15 Sekunden, jedoch nicht mehr als 1 Minute, unterworfen wird, wobei die Enzyme im wesentlichen inaktiviert werden. Die erhaltenen Aromakonzentrate können anschließend steril gelagert werden.

Stufe e)

Die nach dem erfindungsgemäßen Verfahren in Stufe d) erhaltene Fermentatlösung bzw. -suspension mit den gewünschten Geruchs- und Geschmacksstoffen kann nicht nur direkt der zu aromatisierenden Lebensmittelgrundmasse zugesetzt werden, sondern für sich in geeigneter Weise schonend getrocknet werden, z.B. durch Gefriertrocknung, und die getrocknete Mischung als Aromastoff, im Falle von Käsearoma beispielsweise in Form von Käseflocken, z.B. zur Herstellung von charakteristisch zu aromatisierenden Lebensmittelprodukten, z.B. von Gebäck und Soßen, verwendet werden. Wird das aromahaltige Substrat, gegebenenfalls nach vorheriger Standardisierung, in vorher empirisch ermittelten Mengen zur entsprechend vorbereiteten Grundmasse zugesetzt, dann erhält diese augenblicklich das gewünschte Aroma, das sie bei herkömmlicher Herstellung in der Regel erst nach einer wochen- oder monatelangen Reifung erhalten würde. Wie vorstehend bereits erwähnt, kann die Grundmasse ein Milchprodukt, z.B. Käsebruch oder Quark, oder auch ein fleischhaltiges Produkt, sein, dessen Konsistenz so beschaffen ist, daß sich die aromahaltige Substratlösung bzw. -suspension in der Grundmasse homogen verteilen kann. Nach dem Aromazusatz erfolgt zweckmäßig je nach Art des Produktes noch eine kurze Nachreifung bzw. Trocknung.

Die Erfindung wird durch die nachfolgenden Beispiele weiter erläutert.

Beispiel 1

Stufe $a_1$ :

Für die Herstellung eines Lebensmittelproduktes mit spezifischem Käsearoma entsprechend dem erfindungsgemäßen Verfahren wurde als Aromabildner Streptococcus cremoris ausgewählt. Als Nährmedium für diese Kultur dienten 1000 g Magermilch mit einem Gehalt von 18,8% Trockenmasse. Dieses Nährmedium wurde zunächst pasteurisiert und danach in einem sterilen Fermentationsgefäß auf 32°C abgekühlt und, während diese Temperatur gehalten wurde, mit 49,5 g einer Kultur von Streptococcus cremoris beimpft. Die beimpfte Magermilch wurde dann ca. 30 Minuten gerührt, um die Keime gleichmäßig zu dispergieren, wobei die Temperatur weiterhin auf 32°C gehalten wurde. Bei dieser Temperatur erfolgte dann auch die Bebrütung im geschlossenen Fermentationsgefäß 24 Stunden lang bei einem pH-Wert von 5,8. Danach hatte sich eine ausreichende Menge Biomasse gebildet, die abzentrifugiert wurde.

In dem Zentrifugat wurden die Enzyme und Proteine durch Ultrafiltration im Verhältnis 1 : 5 angereichert. Das erhaltene flüssige Konzentrat ist direkt für die Aromatisierung einer ungereiften Käsegrundmasse in Stufe b geeignet. Im vorliegenden Versuch wurde es jedoch zunächst durch Lyophilisieren getrocknet.

Zur Gewinnung der weiteren, in der Biomasse eingeschlossenen Enzyme und Proteine wurde je 1 Teil der abzentrifugierten Biomasse in jeweils 5 Teilen ultrafiltrierter Molke dispergiert und anschließend mittels Ultraschallbehandlung desintegriert. Die ungelösten Zellbestandteile wurden abzentrifugiert und das die Enzyme und Proteine enthaltende Zentrifugat, wie oben angegeben, ebenfalls der Ultrafiltration unterworfen, wobei ein weiteres flüssiges Konzentrat an Enzymen und Proteinen erhalten wurde, das durch Lyophilisieren getrocknet wurde. Das getrocknete Produkt wurde mit dem ersten getrockneten Lyophilisat vereinigt.

Stufe b

500 Gewichtsteile einer zu aromatisierenden, ungereiften Käsegrundmasse, die in üblicher Weise, zum Beispiel gemäß dem Prozeßleitplan für die Herstellung von Edamer-Käse, hergestellt worden war, wurden mit 3000 Gewichtsteilen ultrafiltrierter Molke vermischt und die Mischung homogenisiert und einer Langzeitpasteurisierung unterworfen. Nach dem Abkühlen auf 33,5°C wurde die homogenisierte Mischung in einem sterilen Fermenter mit 15 Teilen des lyophil getrockneten Enzympräparats aus Stufe a) versetzt.

Stufe c

Das erhaltene Gemisch wurde unter Rühren und Stickstoffatmosphäre im geschlossenen Fermenter bei 33,5°C 24 Stunden lang inkubiert. Während der Inkubation wurde die Aromabildung durch regelmäßiges Probenziehen und Bestimmung des Gehaltes an freien Fettsäuren, Diacetyl und bestimmten Aminen, die als Aroma-Leitsubstanzen dienen, sowie anhand des Eiweißabbaus in den Proben verfolgt und kontrolliert. Nach 24 Stunden war die gewünschte Konzentration des gebildeten Aromastoffes erreicht.

Stufe d

Nach Erreichen der gewünschten Konzentration an Geruchs- und Geschmacksstoffen wurde die biochemische Schnellreifung durch Ultrahocherhitzungsbehandlung, bei der die Enzyme weitgehend inaktiviert werden, beendet. Die erhaltene Fermentatsuspension zeichnete sich durch ein volles, charakteristisches Käsearoma aus.

Stufe e

10 g der erhaltenen aromahaltigen Fermentatsuspension wurden in 100 g ungereifte Käsegrundmasse eingearbeitet. Nach der Homogenisierung wurde anhand einer Probe festgestellt, daß mit der eingearbeiteten Fermentatmenge die erwünschten Standardwerte für Peptide und Diacetyl in dem Käseprodukt erreicht wurden. Das Homogenisat wurde anschließend 12 Stunden bei 33,5°C inkubiert, um die volle Aromawirkung in allen Teilen der Käsemasse gleichmäßig zu erreichen. Danach wurde die Inkubation in der oben beschriebenen Weise abgebrochen und das erhaltene Käseprodukt einer Gefriertrocknung unterworfen und anschließend zu Käseflocken weiter verarbeitet.

Beispiel 2

Stufe $a_2$ :

Für die Herstellung eines Lebensmittelproduktes mit typischem Wurstaroma entsprechend dem erfindungsgemäßen Verfahren wurde als Säure- und Aromabildner Lactobacillus plantarum ausgewählt. Als Nährmedium für diese Kultur dienten 1000 g Blutserum mit 5% Fleischpepton als Zusatz. Dieses Nährmedium wurde durch Langzeitpasteurisierung (95°C, 60 Minuten) sterilisiert und anschließend in einem sterilen Fermentationsgefäß auf 40°C abgekühlt und bei dieser Temperatur mit 40 g einer Kultur von Lactobacillus plantarum beimpft. Das beimpfte Substrat wurde dann etwa 10 Minuten gerührt, um die Keime gleichmäßig zu dispergieren, wobei die Temperatur auf 40°C gehalten wurde. Bei dieser Temperatur erfolgte auch die weitere Bebrütung im Fermenter 30 Stunden lang bei einem pH-Wert von 5,0.

Nach dieser Inkubationszeit wurde die Biomasse abzentrifugiert. Das Zentrifugat wurde durch schonendes Einengen im Verhältnis 1 : 5 konzentriert. Das erhaltene flüssige Konzentrat kann direkt für die Aromabildung in einer ungereiften Fleisch- oder Wurstgrundmasse in Stufe b) verwendet werden. Im vorliegenden Fall wurde es jedoch zunächst durch schonendes Lyophilisieren getrocknet.

Zur Gewinnung der in der Biomasse noch eingeschlossenen Enzyme und Proteine wurde jeweils ein Teil der abzentrifugierten Biomasse in jeweils 5 Teilen Wasser dispergiert und anschließend durch Ultraschallbehandlung homogenisiert. Die ungelösten Zellbestandteile wurden abzentrifugiert und das die Enzyme und Proteine enthaltende Zentrifugat durch Ultrafiltration im Verhältnis 1 : 5 eingeengt und dann lyophilisiert. Das erhaltene, getrocknete Lyophilisat wurde mit dem ersten getrockneten Lyophilisat vereinigt.

Stufe b

150 Gewichtsteile einer zu aromatisierenden, ungereiften Wurstgrundmasse (Rohwurstbrät) wurden mit 1000 Teilen proteinfreiem, durch Ultrafiltration hergestellten Blutserum vermischt und die Mischung sorgfältig homogenisiert und anschließend zur Sterilisieren ultrahocherhitzt. Nach dem Abkühlen auf 38°C wurde die homogenisierte Mischung in einem sterilen Fermenter mit 50 Teilen lyophilisiertem Nährmediumzentrifugat und 160 Teilen im Verhältnis 1 : 5 konzentriertem Biomassezentrifugat (siehe Stufe a) versetzt und das Ganze gut vermischt.

Stufe c :

Das erhaltene Gemisch wurde unter Rühren und Kohlendioxidatmosphäre im geschlossenen Fermenter für 12 Stunden inkubiert. Während der Inkubation wurde die Aromabildung durch regelmäßiges Probenziehen anhand der Bestimmung des Gehaltes an freigesetzten Aminosäuren kontrolliert.

Stufe d :

Nach 12 Stunden war die gewünschte Konzentration an Geruchs- und Geschmacksstoffen erreicht, und die biochemische Schnellreifung wurde abgebrochen. Die Enzyme wurden durch Ultrahocherhitzung weitgehend inaktiviert. Die Kontrolle der Inaktivierung wurde durch Messung der proteolytischen Aktivität mittels eines Aminosäure-4-nitroanilid-Gemisches durchgeführt. Die erhaltene Fermentatsuspension zeichnete sich durch einen konzentrierten, vollen Wurstgeschmack aus.

Stufe e :

10 g der erhaltenen aromahaltigen Fermentatsuspension wurden anstelle von Wasser bzw. Eis bei der Herstellung von 100 g Rohwurstbrät verwendet. Nach der Verarbeitung wurde anhand einer Probe festgestellt, daß mit der eingearbeiteten Fermentatmenge die erwünschten Standardwerte für Aminosäuren und Milchsäure erhalten wurden. Das erhaltene Rohwurstbrät wurde anschließend wie üblich weiterverarbeitet.

**Ansprüche**

1. Verfahren zur Herstellung von aromahaltigen Lebensmittelprodukten, dadurch gekennzeichnet daß man

$a_1$) im Falle der Herstellung von Geruchs- und Geschmacksstoffen zur Aromatisierung von Milchprodukten Rein- oder Mischkulturen von in der Käserei gebräuchlichen Mikroorganismen in einem Nährmedium, das mindestens zum Teil aus Molke und/oder Milch besteht, in an sich bekannter Weise züchtet und die exogen und endogen gebildeten Enzymkomplexe isoliert bzw.

$a_2$) im Falle der Herstellung von Geruchs- und Geschmacksstoffen zur Aromatisierung von Fleisch- und Wurstwaren Rein- oder Mischkulturen von für die Erzeugung von Geruchs- und Geschmacksstoffen in Fleisch- und Wurstwaren gebräuchlichen Mikroorganismen in einem Nährmedium, das mindestens zum Teil aus Fleischsaft und/oder Fleischhomogenisat und/oder Blutserum besteht, in an sich bekannter Weise züchtet und die exogen und/oder endogen gebildeten Enzymkomplexe isoliert,

b) die isolierten, ggf. unter schonenden Bedingungen konzentrierten bzw. standardisierten Enzymkomplexe einer wässrigen Lösung oder Suspension der zu aromatisierenden Lebensmittelgrundmasse auf Basis von Milchprodukten bzw. Wurst- und/oder Fleischwaren (= Substrat) zusetzt, die in ihrer Zusammensetzung der Produktzusammensetzung der ungereiften, zu aromatisierenden Lebensmittelgrundmasse, bezogen auf Trockenmasse, entspricht,

c) das erhaltene Gemisch in einem offenen oder geschlossenen Behälter unter für die Ausbildung der Geruchs- und Geschmacksstoffe geeigneten Bedingungen einer biochemischen Schnellreifung unterwirft, wobei die Einwirkungsdauer der Enzymkomplexe auf das Substrat im wesentlichen von der Aktivität der spezifischen Enzyme, der Substratzusammensetzung, den Konzentrationen der Einzelkomponenten, der angewandten Temperatur und der erzielbaren oder gewünschten Konzentration der gebildeten Aromastoffe abhängt,

d) die biochemische Schnellreifung nach Erreichen der gewünschten Konzentration an Geruchs- und Geschmacksstoffen durch weitgehende Inaktivierung der Enzymkomplexe beendet und

e) die die gewünschten Geruchs- und Geschmacksstoffe enthaltende Fermentatlösung bzw. -suspension, gegebenenfalls nach vorheriger schonender Konzentrierung oder Trocknung und/oder Standardisierung, in einer die gewünschte Aromatisierung bewirkenden ausreichenden Menge den megereifter zu aromatisierenden Lebensmittelgrundmassen auf Basis von Milchprodukten bzw. Fleisch- oder Wurstwaren zusetzt, wobei gegebenenfalls eine weitere Reifung des Endproduktes angeschlossen wird.

2. Verfahren nach Anspruch 1, dadurch gekennzeichnet, daß man in Stufe a) die Kultivierung der ausgewählten Rein- oder Mischkulturen in der Weise durchführt, daß man das optimale Nährstoffmedium für die betreffende Kulturenart mit einer möglichst hohen Anfangskeimzahl beimpft und die Enzymbildungs- und Wachstumsphase möglichst kurz hält.

3. Verfahren nach Anspruch 1, dadurch gekennzeichnet, daß man in Stufe b) in der wässrigen Lösung oder Suspension das zu fermentierende Substrat in einer Menge von bis zu 50 Gew.% hält.

4. Verfahren nach Anspruch 1, dadurch gekennzeichnet, daß man in Stufe c) die Aromabildung während der biochemischen Schnellreifung anhand von für die jeweiligen Geruchs- und Geschmacksstoffe charakteristischen Leitsubstanzen, gegebenenfalls durch Headspace-Analyse, kontrolliert.

5. Verfahren nach Anspruch 1, dadurch gekennzeichnet, daß man in Stufe d) die biochemische Schnellreifung durch eine Ultrahocherhitzungsbehandlung beendet.

6. Verwendung der nach dem Verfahren gemäß Ansprüchen 1 bis 5 erhaltenen aromahaltigen Lebensmittelprodukte als Aromastoff zur Herstellung entsprechend aromatisierter Lebensmittel.

## Claims

1. A process for producing aroma-containing food products, wherein

a1) if flavoring or aromatising agents for aromatising diary products are produced, pure or mixed cultures from microorganisms used in cheese making are cultured in a nutrient medium consisting at least in part of whey and/or milk in a manner known per se and the exogeneously and endogeneously formed enzyme complexes are isolated, or

a2) if flavoring and aromatising agents for aromatising meat and sausage products are produced, pure or mixed cultures from microorganisms used for producing flavoring and aromatising agents in meat and sausage products are cultured in a nutrient medium consisting at least in part of meat juice and/or meat homogenate and/or blood serum in a manner known per se and the exogeneously and/or endogeneously formed enzyme complexes are isolated,

b) the isolated enzyme complexes, optionally concentrated or standardized under careful conditions, are added to an aqueous solution or suspension of the basic food substance to be aromatized based on milk products or sausage and/or meat products (= substrate) whose composition corresponds to the product composition of the unripened basic food substance to be aromatized by dry substance,

c) the mixture obtained undergoes a chemical high speed ripening in an open or closed container under conditions suitable for the formation of aromatizing and flavoring agents, the duration of the action of the enzyme complexes on the substrate essentially depending on the activity of the specific enzymes, the substrate composition, the concentrations of the individual components, the temperature used and the obtainable or desired concentration of the aromatic substances formed,

d) on reaching the desired aromatising and flavoring agent concentration, biochemical high speed ripening is terminated by extensive inactivation of the enzyme complexes, and

e) the ferment solution or suspension containing the desired aromatising and flavoring agents and optionally after prior careful concentration or drying and/or standardization is added to the unripened basic food substance based on milk products or meat or sausage products respectively, to be aromatized in an adequate quantity for bringing about the desired aromatization and, if desired, followed by a further ripening of the end product.

2. Process according to claim 1, wherein in step a) the culturing of the selected pure or mixed cultures takes place in such a manner that the optimum nutrient medium for the particular culture type is inocculated with a maximum initial number of bacteria and the enzyme formation and growth phase is kept as short as possible.

3. A process according to claim 1, wherein in step b) the aqueous solution or suspension contains up to 50% by weight of the substrate to be fermented.

4. A process according to claim 1, wherein in step c) the aroma formation during the biochemical rapid ripening process is controlled by control substances characterizing the particular flavoring and aromatizing agents optionally by head space analysis.

5. A process according to claim 1, wherein in step d) the biochemical rapid ripening is terminated by flash pasteurisation.

6. Use of the aroma containing food products obtained according to the process of any of the claims 1 to 5 for producing correspondingly aromatized food products.


**Revendications**

1. Procédé pour la préparation de produits alimentaires aromatisés, caractérisé en ce que

a₁) dans le cas de la préparation de substances organoleptiques pour l'aromatisation de produits laitiers, on prépare d'une manière connue en soi des cultures pures ou mixtes de microorganismes courants en fromagerie, dans un milieu nutritif qui contient au moins en partie du petit-lait et/ou du lait, et on isole les complexes enzymatiques formés de manière exogène et endogène, ou a₂) dans le cas de la préparation de substances organoleptiques pour l'aromatisation de produits de boucherie et de charcuterie, on prépare d'une manière connue en soi des cultures pures ou mixtes de microorganismes usuels pour l'obtention de substances organoleptiques dans les produits de boucherie et de charcuterie, dans un milieu nutritif qui contient au moins en partie du jus de viande et/ou un homogénéisat de viande et/ou du sérum sanguin, et on isole les complexes enzymatiques formés de manière exogène et/ou endogène,

b) on ajoute les complexes enzymatiques isolés, éventuellement concentrés ou normalisés dans des conditions modérées, à une solution ou à une suspension aqueuse de la masse de base du produit alimentaire à aromatiser, contenant des produits laitiers ou des produits de charcuterie et/ou de boucherie (= substrat), qui correspond dans sa composition à la composition de la masse de base du produit alimentaire à aromatiser, non murie, rapportée à la masse sèche,

c) on soumet le mélange obtenu, dans un récipient ouvert ou fermé, à une rapide maturation biochimique dans des conditions appropriées pour la formation de substances organoleptiques, la durée de l'action des complexes enzymatiques sur le substrat dépendant essentiellement de l'activité des enzymes spécifiques, de la composition du substrat, des concentrations des différents constituants, de la température appliquée et de la concentration qui peut être obtenue ou désirée des substances aromatiques formées,

d) on arrête la rapide maturation biochimique après obtention de la concentration désirée en substances organoleptiques, par une inactivation poussée des complexes enzymatiques et

e) on ajoute la solution ou la suspension de fermentation contenant les substances organoleptiques désirées, éventuellement après une concentration ou un séchage préalable dans des conditions modérées et/ou après une normalisation, en quantité suffisante pour obtenir l'aromatisation recherchée, aux masses alimentaires non mûries initiales à aromatiser, contenant des produits laitiers ou des produits de boucherie et de charcuterie, une autre maturation du produit final étant éventuellement ajoutée.

2. Procédé selon la revendication 1, caractérisé en ce qu'au stade a), on effectue la culture des cultures pures ou mixtes choisies, en inoculant le milieu nutritif optimal pour le type de culture concerné avec un nombre de germes initiaux le plus élevé possible et en raccourcissant le plus possible la phase de formation des enzymes et de croissance.

3. Procédé selon la revendication 1, caractérisé en ce qu'au stade b), on maintient le substrat à faire fermenter dans la solution ou la suspension aqueuse en une quantité allant jusqu'à 50%.

4. Procédé selon la revendication 1, caractérisé en ce qu'au stade c), on surveille la formation d'arômes pendant la rapide maturation biochimique à l'aide de substances de référence pour les différentes substances organoleptiques, éventuellement par une analyse "Headspace".

5. Procédé selon la revendication 1, caractérisé en ce qu'au stade d), on arrête la rapide maturation biochimique par un chauffage à ultra-haute température.

6. Utilisation des produits alimentaires aromatisés par le procédé selon l'une quelconque des revendications 1 à 5, en tant qu'aromates pour la fabrication de produits alimentaires aromatisés en conséquence.